(19)

Europäisches
Patentamt
European
Patent Office
Office européen
des brevets

(11)     **EP 2 546 213 A1**

(12)     **EUROPEAN PATENT APPLICATION**
published in accordance with Art. 153(4) EPC

(43) Date of publication:
     **16.01.2013  Bulletin 2013/03**

(51) Int Cl.:
     *C04B 35/46* (2006.01)          *B01D 39/20* (2006.01)

(21) Application number: **11753324.0**

(22) Date of filing: **07.03.2011**

(86) International application number:
     **PCT/JP2011/055272**

(87) International publication number:
     **WO 2011/111666 (15.09.2011 Gazette 2011/37)**

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**

(30) Priority:  **08.03.2010  JP 2010050692**

(71) Applicant: **Sumitomo Chemical Company, Limited
     Tokyo 104-8260 (JP)**

(72) Inventors:
     • **KAN Masahiro
       Niihama-shi
       Ehime 792-0865 (JP)**

     • **UOE Kousuke
       Niihama-shi
       Ehime 792-0025 (JP)**
     • **YOSHINO Hajime
       Niihama-shi
       Ehime 792-0009 (JP)**

(74) Representative: **Vossius & Partner
     Siebertstrasse 4
     81675 München (DE)**

(54)     **GREEN COMPACT AND METHOD FOR PRODUCING ALUMINUM TITANATE SINTERED BODY.**

(57)     A green molded body comprises an organic binder and an inorganic compound source powder containing an aluminum source powder and a titanium source powder, wherein the organic binder is such that the viscosity at 20°C of a 2 wt% aqueous solution of the organic binder is 5000 mPa·s or higher. A method for producing an aluminum titanate fired body includes the steps of molding a raw material mixture comprising an organic binder and an inorganic compound source powder containing an aluminum source powder and a titanium source powder to obtain a green molded body; heating the green molded body obtained at 150°C to 900°C to remove the organic binder; and firing the green molded body from which the organic binder has been removed, at 1300°C or higher, wherein the organic binder is such that the viscosity at 20°C of a 2 wt% aqueous solution of the organic binder is 5000 mPa·s or higher.

## Description

### Technical Field

The present invention relates to a green molded body, and a method for producing an aluminum titanate fired body.

### Background Art

Aluminum titanate ceramics are ceramics which contain titanium and aluminum as constituent elements and have a crystal pattern of aluminum titanate in the X-ray diffraction spectrum, and are known as ceramics having excellent heat resistance. Aluminum titanate ceramics have been traditionally used as tools for sintering, such as crucibles, but in recent years, the industrial utility value of the aluminum titanate ceramics as materials that constitute ceramic filters for capturing the fine carbon particles included in the exhaust gas emitted from internal combustion engines such as diesel engines, is ever increasing.

Regarding the method for producing aluminum titanate ceramics, there is known a method of molding a raw material mixture containing an aluminum source powder and a titanium source powder, and firing the molded body (Patent Document 1). Furthermore, also known is a method of using a raw material mixture which further contains organic additives such as an organic binder and a pore-forming material is used as the raw material mixture, heating a green molded body of this raw material mixture at 150°C to 900°C in an oxygen-containing atmosphere to remove the organic additives, and then firing the raw material mixture at 1300°C or higher (paragraphs 0031 to 0032 of Patent Document 1).

### Citation List

Patent Literature

Patent Document 1: WO 05/105704

### Summary of Invention

Technical Problem

However, in the conventional methods, the strength (shape retention) of the green molded body is not sufficient, and at the time of feeding into a firing furnace or the like, the green molded body cannot maintain the shape. As a result, the dimensional accuracy of the aluminum titanate fired bodies obtained has been unsatisfactory.

An object of the present invention is to provide a green molded body which is capable of maintaining the shape, and a method for producing an aluminum titanate fired body using the green molded body.

Solution to Problem

The inventors of the present invention have conducted a thorough investigation in order to address the problems described above, and as a result, the inventors completed the following inventions.

(1) A green molded body comprising an organic binder and an inorganic compound source powder containing an aluminum source powder and a titanium source powder, wherein the organic binder is such that the viscosity at 20°C of a 2 wt% aqueous solution of the organic binder is 5000 mPa·s or higher.

(2) A method for producing an aluminum titanate fired body, the method including:

a step of molding a raw material mixture which includes an organic binder and an inorganic compound source powder including an aluminum source powder and a titanium source powder to obtain a green molded body;
a step of heating the green molded body obtained at 150°C to 900°C to remove the organic binder; and
a step of firing the green molded body from which the organic binder has been removed, at 1300°C or higher, wherein the organic binder is such that the viscosity at 20°C of a 2 wt% aqueous solution of the organic binder is 5000 mPa·s or higher.

Here, it is preferable that the amount of the organic binder be 0.1 to 20 parts by weight relative to 100 parts by weight of the green molded body.

Furthermore, it is preferable that the inorganic compound source powder further include a silicon source powder.

Also, it is preferable that the inorganic compound source powder further include a magnesium source powder.

Furthermore, it is preferable that the molar ratio of the aluminum source powder in terms of $Al_2O_3$ and the titanium source powder in terms of $TiO_2$ in the raw material mixture be in the range of 35:65 to 45:55.

Furthermore, it is preferable that the green molded body have a honeycomb shape.

Advantageous Effects of Invention

The green molded body of the present invention contains an organic binder which, when prepared into a 2 wt% aqueous solution, has a viscosity of 5000 mPa·s or higher, and thus, the green molded body has excellent shape retention. Furthermore, according to the method for producing an aluminum titanate fired body of the present invention, a molded body having excellent shape retention is obtained by using, as a raw material, an organic binder which has a viscosity of 5000 mPa·s or higher when prepared into a 2 wt% aqueous solution, and an aluminum titanate fired body having high dimensional accuracy can be efficiently produced.

**Brief Description of Drawings**

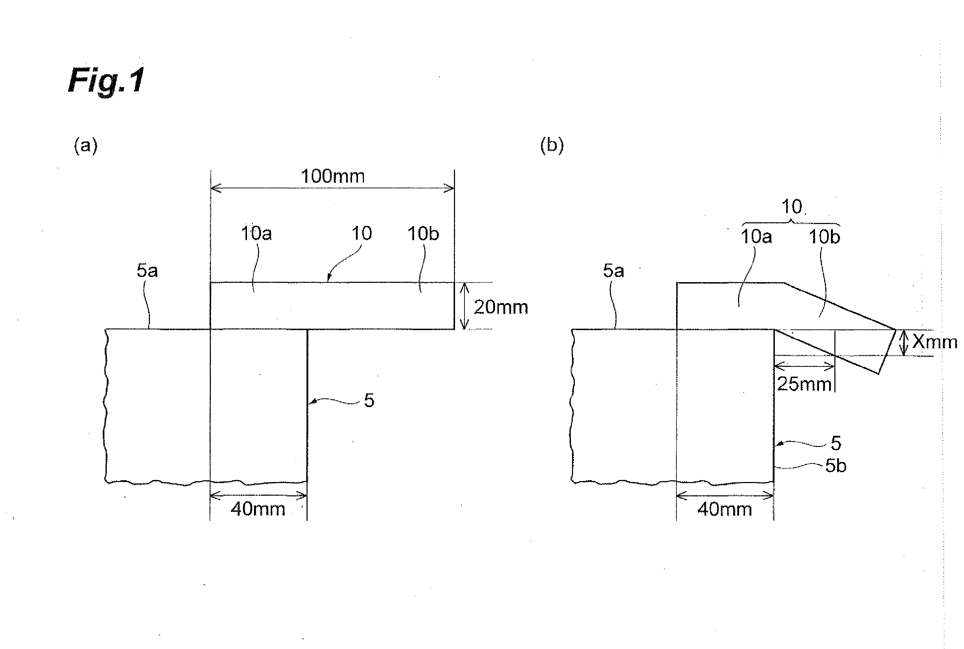

FIG 1(a) and FIG 1(b) are schematic diagrams illustrating a method for investigating shape retention in the embodiments.

**Description of Embodiments**

<Green molded body>

The green molded body of the present invention contains an inorganic compound source powder and an organic binder.

The inorganic compound source powder contains an aluminum source powder and a titanium source powder. The inorganic compound source powder can further contain a magnesium source powder and/or a silicon source powder.

(Aluminum source powder)

The aluminum source is a compound which serves as an aluminum component that constitutes the aluminum titanate fired body. Examples of the aluminum source include alumina (aluminum oxide). Examples of the crystal form of alumina include γ-form, δ-form, θ-form, and α-form, and the alumina may also be amorphous. Among them, α-form alumina is preferably used.

The aluminum source may also be a compound which is converted into alumina when fired alone in air. Examples of such a compound include an aluminum salt, an aluminum alkoxide, aluminum hydroxide, and aluminum metal.

The aluminum salt may be an inorganic salt with an inorganic acid, and may also be an organic acid with an organic acid. Specific examples of the inorganic aluminum salt include aluminum nitric acid salts such as aluminum nitrate and aluminum ammonium nitrate; and aluminum carbonic acid salts such as aluminum ammonium carbonate. Examples of the organic aluminum salt include aluminum oxalate, aluminum acetate, aluminum stearate, aluminum lactate, and aluminum laurate.

Specific examples of the aluminum alkoxide include aluminum isopropoxide, aluminum ethoxide, aluminum sec-butoxide, and aluminum tert-butoxide.

Examples of the crystal form of aluminum hydroxide include gibbsite form, bayerite form, Nordstrandite form, boehmite form, and pseudo-boehmite form, and aluminum hydroxide may also be amorphous. Examples of amorphous aluminum hydroxide include aluminum hydrolysates obtainable by hydrolyzing aqueous solutions of water-soluble aluminum compounds such as aluminum salts and aluminum alkoxides.

Regarding the aluminum source, only one kind may be used, or two or more kinds may be used in combination.

Among the compounds described above, alumina is preferably used as the aluminum source, and more preferred is α-type alumina. Meanwhile, the aluminum sources may contain trace components that originate from the raw materials or are unavoidably incorporated in the production processes.

The particle size of the aluminum source powder is not particularly limited, but usually, the particle size corresponding to a volume-based cumulative percentage of 50% (may be referred to as D50 or average particle size), which is measured by a laser diffraction method, is in the range of 20 to 60 μm. From the viewpoint of decreasing the shrinkage ratio at the time of firing, it is preferable to use an aluminum source powder having a D50 value in the range of 30 to 60 μm.

In order to obtain a green molded body having such a particle size distribution, an alumina sol or a silica sol that will be described below can be added to the green molded body. As such, when an alumina sol, a silica sol and the like are added, fine particles are adsorbed, and the amount of particles having a particle size of 0.1 μm or less in the molded body can be adjusted to 1 to 5 parts by weight relative to 100 parts by weight of the inorganic compound source powder (solids content). Thereby, the strength of the molded body after degreasing at 500°C can be adjusted to, for example, 0.2 kgf or higher.

The alumina sol is a colloid which contains alumina in a fine particle form as a dispersoid, and a liquid as a dispersion medium. The alumina sol may be used alone as an aluminum source, but is preferably used in combination with other aluminum sources. The dispersion medium of the alumina sol is removed by, for example, evaporation or the like at the time of mixing or calcination.

Examples of the dispersion medium of the alumina sol include aqueous solutions and various organic solvents, for example, an aqueous hydrochloric acid solution, an aqueous acetic acid solution, an aqueous nitric acid solution, an alcohol, xylene, toluene, and methyl isobutyl ketone. As the alumina sol, a colloidal alumina sol having an average particle size of 1 to 100 nm is suitably used. When an alumina sol having such an average particle size is used, there is an advantage that the particles in the raw material mixture are adsorbed to each other. Furthermore, examples of the commercial products of alumina sol include "Alumina Sol 100", "Alumina Sol 200", and "Alumina Sol 520" manufactured by Nissan Chemical Industries, Ltd.; and "Nano Tek $Al_2O_3$" manufactured by C.I. Kasei Co., Ltd. Among these, it is preferable to use "Alumina Sol 200" manufactured by Nissan Chemical Industries, Ltd.

The alumina sol can be used in an amount of 0.1 to 10 parts by weight, and preferably 1 to 5 parts by weight, relative to 100 parts by weight of the inorganic compound source powder (solids content). The alumina sol may also be used as a mixture of two or more kinds.

(Titanium source powder)

The titanium source is a compound which serves as a titanium component that constitutes the aluminum titanate fired body. Examples of such a compound include titanium oxide. Examples of titanium oxide include titanium (IV) oxide, titanium (III) oxide, and titanium (II) oxide, and among them, titanium (IV) oxide is preferably used. Examples of the crystal form of titanium (IV) oxide include anatase type, rutile type, and brookite type, and titanium (IV) oxide may also be amorphous. More preferred crystal forms are anatase type and rutile type titanium (IV) oxide.

The titanium source may also be a compound which is converted into titania (titanium oxide) when fired alone in air. Examples of such a compound include a titanium salt, a titanium alkoxide, titanium hydroxide, titanium nitride, titanium sulfide, and titanium metal.

Specific examples of the titanium salt include titanium trichloride, titanium tetrachloride, titanium (IV) sulfide, titanium (VI) sulfide, and titanium (IV) sulfate. Specific examples of the titanium alkoxide include titanium (IV) ethoxide, titanium (IV) methoxide, titanium (IV) t-butoxide, titanium (IV) isobutoxide, titanium (IV) n-propoxide, titanium (IV) tetraisopropoxide, and chelate compounds thereof.

Regarding the titanium source, only one kind may be used, or two or more kinds may be used in combination.

Among those described above, titanium oxide is preferably used as the titanium source, and a more preferred titanium source is titanium (IV) oxide. Meanwhile, the titanium source can contain trace components that originate from the raw materials or are unavoidably incorporated in the production processes.

The particle size of the titanium source powder is not particularly limited, but usually, a titanium source powder having a particle size corresponding to a volume-based cumulative percentage of 50% (D50) in the range of 0.5 to 25 $\mu$m as measured by a laser diffraction method, is used. In order to achieve a sufficiently low firing shrinkage ratio, it is preferable to use a titanium source powder having a D50 value in the range of 1 to 20 $\mu$m. Meanwhile, the titanium source powder may exhibit a bimodal particle size distribution, but in the case of using a titanium source powder which exhibits such a bimodal particle size distribution, the particle size of the peak for the larger particle size fraction in the particle size distribution measured by a laser diffraction method is preferably in the range of 20 to 50 $\mu$m.

The mode diameter of the titanium source powder measured by a laser diffraction method is not particularly limited, but a titanium source powder having a mode diameter in the range of 0.3 to 60 $\mu$m can be used.

The molar ratio of the aluminum source in terms of $Al_2O_3$ (alumina) and the titanium source in terms of $TiO_2$ (titania) in the molded body is preferably set to the range of 35:65 to 45:55, and more preferably to the range of 40:60 to 45:55. When the titanium source is used in excess relative to the aluminum source in this range, the shrinkage ratio at the time of firing can be decreased.

(Magnesium source powder)

The green molded body may contain a magnesium source powder. When the green molded body contains a magnesium source powder, the aluminum titanate fired body obtained is a fired body composed of aluminum magnesium titanate crystals.

The magnesium source may be a compound which is converted into magnesia (magnesium oxide) when fired alone in air. Examples of the latter include, for example, a magnesium salt, a magnesium alkoxide, magnesium hydroxide, magnesium nitride, and magnesium metal.

Specific examples of the magnesium salt include magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate.

Specific examples of the magnesium alkoxide include magnesium methoxide and magnesium ethoxide. Meanwhile, the magnesium source can contain trace components that originate from the raw materials or are unavoidably incorporated in the production processes.

A compound which combines a magnesium source and an aluminum source can also be used as the magnesium source. Examples of such a compound include magnesia spinel ($MgAl_2O_4$). Meanwhile, when a compound which combines a magnesium source and an aluminum source is used as the magnesium source, the molar ratio of the total amount of the amount of the aluminum source in terms of $Al_2O_3$ (alumina) and the amount of the Al component, in terms of $Al_2O_3$ (alumina), contained in the compound which combines a magnesium source and an aluminum source, and the amount of the titanium source in terms of $TiO_2$ (titania), is adjusted to be in the range described above in the raw material mixture.

Regarding the magnesium source, only one kind may be used, or two or more kinds may be used in combination.

The particle size of the magnesium source powder is not particularly limited, but usually, a magnesium source powder having a particle size corresponding to a volume-based cumulative percentage of 50% (D50) in the range of 0.5 to 30 $\mu$m as measured by a laser diffraction method, is used. From the viewpoint of decreasing the shrinkage ratio at the time of firing, it is preferable to use a magnesium source powder having a D50 value in the range of 3 to 20 $\mu$m.

The content of the magnesium source in terms of MgO (magnesia) in the green molded body is preferably 0.03 to 0.15 as a molar ratio with respect to the total amount of the aluminum source in terms of $Al_2O_3$ (alumina) and the titanium source in terms of $TiO_2$ (titania), and more preferably 0.03 to 0.12. When the content of the magnesium source is adjusted to this range, an aluminum titanate fired body having a large pore size and a large ratio of open pores, with further improved heat resistance, can be relatively easily obtained.

(Silicon source powder)

The green molded body may further contain a silicon source powder. The silicon source is a compound that is incorporated in the aluminum titanate fired body after being converted into a silicon component, and when a silicon source is used in combination, an aluminum titanate fired body having further enhanced heat resistance can be obtained. Examples of the silicon source include silicon oxides (silica) such as silicon dioxide and silicon monoxide.

The silicon source may be a compound that is converted to silica when fired alone in air. Examples of such a compound include silicic acid, silicon carbide, silicon nitride, silicon sulfide, silicon tetrachloride, silicon acetate, sodium silicate, sodium orthosilicate, feldspar, and glass frit. Among them, feldspar, glass frit and the like are preferably used, and from the viewpoint of being industrially easily available and having a stable composition, glass frit and the like are more preferably used. Meanwhile, glass frit means flaky or powdered glass obtainable by pulverizing glass. A powder formed from a mixture of feldspar and glass frit can also be used as the silicon source.

When the silicon source is glass frit, from the viewpoint of further improving the heat resistant decomposability of the aluminum titanate fired body obtained, it is preferable to use a glass frit having a yield point of 700°C or higher. The yield point of glass frit is defined as the temperature (°C) at which shrinkage starts, when expansion of the glass frit is measured from a low temperature by using a thermomechanical analyzer (TMA: Thermo Mechanical Analysis), expansion stops, and then shrinkage starts.

For the glass that constitutes glass frit, general silicic acid glass containing silicic acid ($SiO_2$) as a main component (50% by weight or more of the total amount of the components) can be used. The glass that constitutes glass frit may also contain alumina [$Al_2O_3$], sodium oxide [$Na_2O$], potassium oxide [$K_2O$], calcium oxide [$CaO$], magnesia [MgO] and the like as other components contained, similarly to general silicic acid glass. Furthermore, the glass that constitutes glass frit may contain $ZrO_2$ in order to enhance the hot water resistance of glass itself.

Regarding the silicon source, only one kind may be used, or two or more kinds may be used in combination.

The particle size of the silicon source is not particularly limited, but a silicon source having a particle size corresponding to a volume-based cumulative percentage of 50% (D50) in the range of 0.5 to 30 $\mu$m as measured by a laser diffraction method, is used. In order to further enhancing the filling ratio of the molded body of the raw material mixture and to obtain a fired body having higher mechanical strength, it is preferable to use a silicon source powder having a D50 value in the range of 1 to 20 $\mu$m.

When the green molded body contains a silicon source, the content of the silicon source in the green molded body is usually 0.1 parts by weight to 10 parts by weight, and more preferably 5 parts by weight or less, in terms of $SiO_2$ (silica), relative to 100 parts by weight of the total amount of the aluminum source in terms of $Al_2O_3$ (alumina) and the titanium source in terms of $TiO_2$ (titania). Furthermore, the content of the silicon source in the green molded body is more preferably set to higher than or equal to 2% by weight and less than or equal to 5% by weight of the inorganic compound sources contained in the green molded body. The silicon source can contain trace components that originate from the raw materials or are unavoidably incorporated in the production process.

Similarly to the composite oxide such as magnesia spinel ($MgAl_2O_4$), a compound containing two or more metal elements selected from titanium, aluminum, silicon and magnesium as the components, can be used as a raw material. In this case, such a compound can be considered to be equivalent to a mixture of the respective metal source compounds. Based on this idea, the amounts of the aluminum source, titanium source, magnesium source and silicon source in the green molded body are adjusted to the ranges described above.

When the content of the particles having a particle size of 0.1 $\mu$m or less is adjusted to 1 to 5 parts by weight relative to 100 parts by weight of the inorganic compound source powder in the green molded body, as described above, it is preferable to add and mix an alumina sol and/or a silica sol into the green molded body. A silica sol is a colloid containing silica in a fine particle form as a dispersoid and a liquid as a dispersion medium. The silica sol can be used alone as a silicon source, but is preferably used in combination with other silica sources. The dispersion medium of the silica sol is removed by, for example, evaporation or the like at the time of mixing or at the time of calcination.

Examples of the dispersion medium of the silica sol include aqueous solutions and various organic solvents, and examples thereof include an aqueous ammonia solution, an alcohol, xylene, toluene, and triglycerides. As the silica sol, a colloidal silica sol having an average particle size of 1 to 100 nm is suitably used. When a silica sol having such an average particle size is used, there is an advantage that the particles in the raw material mixture can be adsorbed to each other, so as to melt and bond at the time of firing.

Examples of commercially available products of silica sol include "Snowtex 20, 30, 40, 50, N, O, S, C, 20 L, OL, XS, XL, YL, ZL, QAS-40, LSS-35 and LSS-45" manufactured by Nissan Chemical Industries, Ltd.; "Adelite AT-20, AT-30, AT-40, AT-50, AT-20 N, AT-20 A, Art-30 A, AT-20 Q, AT-300 and AT-300 Q" manufactured by Adeka Corp.; "Cataloid S-20 L, S-20 H, S-30 L, S-30 H, SI-30, SI-40, SI-50, SI-350, SI-500, SI-45 P, SI-80 P, SN, SA and SC-30" manufactured by Catalysts & Chemicals Industries Co., Ltd.; and "Ludox HS-40, HS-30, LS, SM-30, TM, AS and AM" manufactured by DuPont Company. Among these, it is preferable to use "Snowtex C", in which the colloidal state is stable in a neutral region.

The silica sol is used in an amount of 0.1 to 10 parts by weight, and preferably 1 to 5 parts by weight, in terms of solids content, relative to 100 parts by weight of the inorganic compound source powder (solids content). For the silica sol, a mixture of two or more kinds may also be used.

The green molded body can contain aluminum titanate or aluminum magnesium titanate, and for example, when aluminum magnesium titanate is used as a constituent component of the molded body, aluminum magnesium titanate corresponds to a raw material which functions as a titanium source, an aluminum source and a magnesium source in combination.

(Organic binder)

The green molded body contains a water-soluble organic binder. This organic binder is such that a 2 wt% aqueous solution of this organic binder has a viscosity at 20°C of 5,000 mPa·s or higher, and preferably 10,000 mPa·s or higher. The viscosity of the aqueous solution can be measured with, for example, a Brookfield type viscometer. This organic binder is preferably such that the viscosity at 20°C of a 2 wt% aqueous solution of this organic binder is 50,000 mPa·s or less.

Examples of the organic binder include celluloses such as methyl cellulose, carboxymethyl cellulose, and sodium carboxymethyl cellulose; alcohols such as polyvinyl alcohol; and salts such as lignin sulfonate.

The amount of the organic binder is usually 20 parts by weight or less, preferably 15 parts by weight or less, and more preferably 6 parts by weight, relative to 100 parts by weight of the total amount of the aluminum source, titanium source, magnesium source and silicon source, that is, the inorganic compound source powder. Furthermore, the lower limit amount of the organic binder is usually 0.1 parts by weight, and preferably 3 parts by weight.

(Other additives)

The green molded body can contain other organic additives in addition to the organic binder. Examples of the other organic additives include a pore-forming agent, a lubricating agent and plasticizer, a dispersant, and a solvent.

Examples of the pore-forming agent include carbon materials such as graphite; resins such as polyethylene, polypropylene, and polymethyl methacrylate; plant materials such as starch, nutshells, walnut shells, and corn; ice; and dry ice. The amount of addition of the pore-forming agent is usually 0 to 40 parts by weight, and preferably 0 to 25 parts by weight, relative to 100 parts by weight of the total amount of the aluminum source, titanium source, magnesium source and silicon source, that is, the inorganic compound source powder.

Examples of the lubricating agent and plasticizer include alcohols such as glycerin; higher fatty acids such as caprylic acid, lauric acid, palmitic acid, araginic acid, oleic acid, and stearic acid; stearic acid metal salts such as aluminum stearate; and polyoxyalkylene alkyl ethers. The amount of addition of the lubricating agent and plasticizer is usually 0 to 10 parts by weight, and preferably 1 to 5 parts by weight, relative to 100 parts by weight of the total amount of the aluminum source, titanium source, magnesium source and silicon source, that is, the inorganic compound source powder.

Examples of the dispersant include inorganic acids such as nitric acid, hydrochloric acid, and sulfuric acid; organic acids such as oxalic acid, citric acid, acetic acid, malic acid, and lactic acid; alcohols such as methanol, ethanol, and propanol; and surfactants such as ammonium polycarbonate. The amount of addition of the dispersant is usually 0 to 20 parts by weight, and preferably 2 to 8 parts by weight, relative to 100 parts by weight of the total amount of the aluminum source, titanium source, magnesium source and silicon source, that is, the inorganic compound source powder.

Examples of the solvent that can be used include alcohols such as methanol, ethanol, butanol, and propanol; glycols such as propylene glycol, polypropylene glycol, and ethylene glycol; and water. Among them, water is preferred, and from the viewpoint of having fewer impurities, ion-exchanged water is more preferred. The amount of use of the solvent is usually 10 parts by weight to 100 parts by weight, and preferably 20 parts by weight to 80 parts by weight, relative to 100 parts by weight of the total amount of the aluminum source, titanium source, magnesium source and silicon source, that is, the inorganic compound source powder.

(Shape of green molded body)

The shape of the green molded body is not particularly limited, and the green molded body can acquire any shape according to the use. For example, in the case of a green molded body for DPF filters, a so-called honeycomb shape, that is, a shape which has a large number of through-holes extending in the same direction, with a large number of flow channels formed by the large number of through-holes being separated by partitions, is preferred. Further examples include a rod shape, a tubular shape, a plate shape, and a crucible shape.

(Method for producing green molded body)

The green molded body can be produced, for example, as follows.
First, an inorganic compound source powder including an aluminum source powder, a titanium source powder, and a magnesium source powder and a silicon source powder that are incorporated as necessary, an organic binder, a solvent, and additives that are added as necessary, are prepared.
These components are mixed at the ratio described above by means of a kneading machine or the like, to obtain a raw material mixture, and a raw material mixture thus obtained is molded. Thereby, a green molded body having a desired shape can be obtained. Here, there are no particular limitations on the molding method, and for example, a uniaxial press machine, an extrusion molding machine, a tableting machine, a granulator and the like may be used.

<Method for producing aluminum titanate fired body>

An aluminum titanate fired body can be obtained by calcining (degreasing) and firing the green molded body described above. The aluminum titanate fired body obtained is a fired body made of aluminum titanate crystals. When the green molded body is molded and then fired, shrinkage during firing can be suppressed as compared with the case of directly firing the raw material mixture, and cracking of the aluminum titanate fired body obtained can be effectively suppressed. Furthermore, an aluminum titanate fired body in which the pore shapes of porous aluminum titanate crystals produced by firing are maintained, can be obtained.

Calcination (degreasing) is a process for removing an organic binder in the green molded body, or any organic additives that are incorporated as necessary, by burning up, decomposition or the like, and typically, the process is conducted in a stage of temperature increase to reach the firing temperature (for example, a temperature range of 150°C to 900°C). In the calcination (degreasing) process, it is preferable to suppress the rate of temperature increase as far as possible.

The firing temperature in the firing of the green molded body is usually 1300°C or higher, and preferably 1400°C or higher. Furthermore, the firing temperature is usually 1650°C or lower, and preferably 1550°C or lower. There are no particular limitations on the rate of temperature increase up to the firing temperature, but the rate is usually 1°C/hour to 500°C/hour. When the green molded body contains a silicon source powder, it is preferable to provide a process for retaining the green molded body for 3 hours or longer at a temperature in the range of 1100°C to 1300°C, before the firing process. Thereby, fusion and diffusion of the silicon source powder can be accelerated.

Firing is usually carried out in the atmosphere; however, depending on the type or the ratio of the amounts of use of the raw material powders used, that is, the aluminum source powder, the titanium source powder, the magnesium source powder and the silicon source powder, firing may be carried out in an inert gas such as nitrogen gas or an argon gas, or firing may be carried out in a reducing gas such as carbon monoxide gas or hydrogen gas. Furthermore, firing may also be carried out in an atmosphere with a decreased water vapor partial pressure.

Firing is usually carried out by using a conventional firing furnace such as a tubular electrical furnace, a box type electrical furnace, a tunnel furnace, a far infrared furnace, a microwave heating furnace, a shaft furnace, a reverberatory furnace, a rotary furnace, or a roller hearth furnace. Firing may be carried out in a batch mode, or may also be carried out in a continuous mode. Furthermore, firing may be carried out in a static mode, or may also be carried out in a fluidized mode.

The time required for firing may be a time sufficient for the transition of the green molded body to aluminum titanate crystals. The time may vary with the amount of the green molded body, the type of the firing furnace, the firing temperature, the firing atmosphere and the like, but the time is usually 10 minutes to 24 hours.

As described above, an intended aluminum titanate fired body can be obtained. Such an aluminum titanate fired body has a shape which almost maintains the shape of the green molded body immediately after molding. The aluminum titanate fired body thus obtained can also be processed to a desired shape by grinding processing or the like.

The aluminum titanate fired body obtained by the method described above can be suitably applied to, for example, tools for firing furnaces such as a crucible, a setter, a saggar, and a furnace material; ceramic filters such as exhaust gas filters used in the exhaust gas purification of internal combustion engines such as diesel engines and gasoline engines, catalyst carriers, filtering filters used for the filtration of foods such as beer, and selective permeation filters for selectively permeating gas components generated at the time of petroleum purification, for example, carbon monoxide, carbon dioxide, nitrogen and oxygen; and electronic components such as substrates and condensers. Among them, when the aluminum titanate fired body is used in ceramic filters and the like, the aluminum titanate fired body has a high pore volume and a high ratio of open pores, and can therefore maintain satisfactory filter performance over a long time period.

The aluminum titanate fired body may also include the crystal patterns of alumina, titania and the like, in addition to the crystal pattern of aluminum titanate or aluminum magnesium titanate, in the X-ray diffraction spectrum. Meanwhile, when the aluminum titanate fired body is composed of aluminum magnesium titanate crystals, the material can be represented by composition formula: $Al_{2(1-x)}Mg_xTi_{(1+x)}O_5$, while the value of x is 0.03 or higher, preferably from 0.03 to 0.15, and more preferably from 0.03 to 0.12. Furthermore, the aluminum titanate fired body obtained by the present invention can contain trace components that originate from the raw materials or are unavoidably incorporated in the production process.

EXAMPLES

Flereinafter, the present invention will be described in more detail by way of Examples, but the present invention is not intended to be limited to these.

The shape retention, shrinkage ratio and viscosity were measured by the following methods.

(1) Shape retention of green molded body

1. As shown in FIG. 1(a), a specimen 10 having a size of 100 mm in horizontal length x 20 mm in width x 20 mm in height was cut from a green molded body. 2. A part 10a of 0 to 40 mm from one end (left end) in the longitudinal direction of the specimen 10 was fixed onto the horizontal surface 5a of a pedestal 5. The lower surface of a part 10b on the other end side of the specimen 10 was retained by a support that is not depicted in the diagram, so that the part 10b of the other end (right end) side (40 to 100 mm) of the specimen would not deform during the fixing operation. 3. The support was removed, and the part 10b on the other end side of the specimen 10 was deformed as shown in FIG. 1(b). After 60 seconds from the removal of the support, the displacement X in the vertical direction of the lower surface of the part 10b on the other end side of the specimen 10 was measured. Here, the displacement X in the vertical direction was measured at a location at which the specimen was detached 25 mm in the horizontal direction from the end surface 5b of the horizontal surface 5a of the pedestal 5. The displacement was measured for three specimens in total, and the average value was determined.

(2) Shrinkage ratio before and after firing

The lengths in the extrusion cross-sectional direction (cross-section in the direction perpendicular to the extrusion direction in the molded body) of a green molded body before degreasing and firing (after extrusion molding) and a fired article after degreasing and firing were measured at two locations respectively, and from the average length before firing and the average length after firing obtainable by averaging those values, the shrinkage ratio was calculated based on the following formula.

$$\text{Shrinkage ratio (\%)} = \{1 - (\text{average length after firing})/(\text{average length before firing})\} \times 100$$

(3) Viscosity of 2 wt% aqueous solution of organic binder

An organic binder was dissolved in pure water to a concentration of 2% by weight, and the viscosity thereof was measured by using a B type viscometer under the conditions of 20°C.

<Example 1>

Green molded bodies were obtained by using the following powders as the inorganic compound source powder. The feed compositions of the inorganic compound source powders was such that, as molar percentages in terms of alumina [$Al_2O_3$], titania [$TiO_2$], magnesia [$MgO$] and silica [$SiO_2$], [$Al_2O_3$]/[$TiO_2$]/[$MgO$]/[$SiO_2$] = 35.1%/51.3%/9.6%/4.0%. The content of the silicon source powder in the total amount of the aluminum source powder, titanium source powder, magnesium source powder and silicon source powder was 4.0% by weight.

(1) Aluminum source powder

$\alpha$-alumina powder having an average particle size indicated in Table 1 24.6 parts by weight

(2) Titanium source powder

Rutile type titania powder having an average particle size indicated in Table 1 42.0 parts by weight

(3) Magnesium source powder

Magnesia spinel powder having an average particle size indicated in Table 1 15.7 parts by weight

(4) Silicon source powder

Glass frit having an average particle size indicated in Table 1 ("CK0832" manufactured by Takara Standard Co., Ltd.) 3.4 parts by weight

14.3 parts of corn starch having an average particle size indicated in Table 1 as a pore-forming agent, 3.9 parts by weight of methyl cellulose (trade name: Metolose 90SH-30000, the viscosity at 20°C of a 2 wt% aqueous solution is 30,000 mPa·s) as an organic binder, 1.9 parts by weight of a polyoxyalkylene alkyl ether (trade name: Unilube 50MB-72) as a plasticizer, and 0.2 parts by weight of glycerin as a lubricating agent were added to a mixture composed of an aluminum source powder, a titanium source powder, a magnesium source powder and a silicon source powder, and furthermore, 27.3 parts by weight of water as a dispersion medium (solvent) and 0.2 g of Ceramisol (trade name: C-08) as a dispersant were added thereto. Subsequently, the mixture was kneaded at 25°C by using a kneading machine, and thereby a green body (raw material mixture for molding) was prepared. Subsequently, this green body was extrusion molded, and thereby a green molded body was produced. The green molded body had a shape retention of 9.8 mm.

The green molded body was rapidly heated in a microwave dryer, and then was dried by retaining the green molded body for 5 hours at 100°C. Subsequently, firing including a calcination (degreasing) process for removing the binder in an air atmosphere was carried out, and thus an aluminum magnesium titanate porous fired body was obtained. The maximum temperature at the time of firing was set to 1450°C, and the retention time at the maximum temperature was set to 5 hours. The shrinkage ratio at this time was 8.9%.

[Table 1]

|  | Average particle size ($\mu$m) |
| --- | --- |
| Alumina | 36.1 |
| Titania | 1.0 |
| Magnesia spinel | 5.2 |

(continued)

| | Average particle size ($\mu$m) |
|---|---|
| Glass frit | 8.8 |
| Corn starch | 15.4 |

<Example 2>

The same operation as that carried out in Example 1 was carried out, except that the amount of methyl cellulose (trade name: Metolose 90SH-30000) was changed from 3.9 parts by weight to 4.9 parts by weight, and thus a green molded body and a porous fired body were obtained. The green molded body had a shape retention of 8.2 mm. The shrinkage ratio at the time of firing was 9.1%.

<Example 3>

The same operation as that carried out in Example 1 was carried out, except that the amount of methyl cellulose (trade name: Metolose 90SH-30000) was changed from 3.9 parts by weight to 5.9 parts by weight, and thus a green molded body and a porous fired body were obtained. The green molded body had a shape retention of 8.7 mm. The shrinkage ratio at the time of firing was 9.6%.

<Example 4>

The same operation as that carried out in Example 1 was carried out, except that methyl cellulose (trade name: Mecellose PMB-15UFF, the viscosity at 20°C of a 2 wt% aqueous solution is 15000 mPa·s) was used instead of 3.9 parts by weight of methyl cellulose (trade name: Metolose 90SH-30000) as an organic binder, and the amount of methyl cellulose was changed to 6.0 parts by weight, and thus a green molded body and a porous fired body were obtained. The green molded body had a shape retention of 10.0 mm. The shrinkage ratio at the time of firing was 9.4%.

<Comparative Example 1>

The same operation as that carried out in Example 1 was carried out, except that 7.8 parts by weight of methyl cellulose (trade name: Metolose 60SH-4000, the viscosity at 20°C of a 2 wt% aqueous solution is 4000 mPa·s) was used instead of 3.9 parts by weight of methyl cellulose (trade name: Metolose 90SH-30000) as an organic binder, and the amount of methyl cellulose was changed to 6.0 parts by weight, and thus a green molded body and a porous fired body were obtained. The green molded body had a shape retention of 18.7 mm. The shrinkage ratio at the time of firing was 12.0%.

**Claims**

1. A green molded body comprising an organic binder and an inorganic compound source powder containing an aluminum source powder and a titanium source powder,
   wherein the organic binder is such that the viscosity at 20°C of a 2 wt% aqueous solution of the organic binder is 5000 mPa·s or higher.

2. The green molded body according to claim 1, wherein the amount of the organic binder is 0.1 to 20 parts by weight relative to 100 parts by weight of the inorganic compound source powder.

3. The green molded body according to claim 1 or 2, wherein the inorganic compound source powder further contains a silicon source powder.

4. The green molded body according to any one of claims 1 to 3, wherein the inorganic compound source powder further contains a magnesium source powder.

5. The green molded body according to any one of claims 1 to 4, wherein the molar ratio of the aluminum source powder in terms of $Al_2O_3$ and the titanium source powder in terms of $TiO_2$ is in the range of 35:65 to 45:55.

6. The green molded body according to any one of claims 1 to 5, having a honeycomb shape.

7. A method for producing an aluminum titanate fired body, the method comprising:

   a step of molding a raw material mixture comprising an organic binder and an inorganic compound source powder containing an aluminum source powder and a titanium source powder to obtain a green molded body;
   a step of heating the green molded body obtained at 150°C to 900°C to remove the organic binder; and
   a step of firing the green molded body from which the organic binder has been removed, at 1300°C or higher, wherein the organic binder is such that the viscosity at 20°C of a 2 wt% aqueous solution of the organic binder is 5000 mPa·s or higher.

8. The method according to claim 7, wherein the amount of the organic binder is 0.1 to 20 parts by weight relative to 100 parts by weight of the inorganic compound source powder.

9. The method according to claim 7 or 8, wherein the inorganic compound source powder further contains a silicon source powder.

10. The method according to any one of claims 7 to 9, wherein the inorganic compound source powder further contains a magnesium source powder.

11. The method according to any one of claims 7 to 10, wherein the molar ratio of the aluminum source powder in terms of $Al_2O_3$ and the titanium source powder in terms of $TiO_2$ is in the range of 35:65 to 45:55.

12. The method according to any one of claims 7 to 11, wherein the molded body has a honeycomb shape.

*Fig.1*

(a)

(b)

# EP 2 546 213 A1

<table>
<tr><td colspan="2" align="center"><strong>INTERNATIONAL SEARCH REPORT</strong></td><td>International application No.<br>PCT/JP2011/055272</td></tr>
</table>

**A. CLASSIFICATION OF SUBJECT MATTER**
*C04B35/46*(2006.01)i, *B01D39/20*(2006.01)i

According to International Patent Classification (IPC) or to both national classification and IPC

**B. FIELDS SEARCHED**

Minimum documentation searched (classification system followed by classification symbols)
C04B35/46, B01D39/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2005/005019 A1 (Ohcera Co., Ltd.),<br>20 January 2005 (20.01.2005),<br>claim 4; page 6, lines 33 to 47; page 9,<br>table 2<br>& US 2007/0059484 A1 & EP 1645319 A1<br>& CA 2528921 A & KR 10-2006-0030855 A<br>& CN 1816379 A | 1-12 |
| Y | JP 2002-037673 A (Ibiden Co., Ltd.),<br>06 February 2002 (06.02.2002),<br>claims 1 to 4; paragraphs [0001], [0017],<br>[0024], [0043], [0062] to [0064]<br>(Family: none) | 1-12 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 April, 2011 (25.04.11) | 10 May, 2011 (10.05.11) |

| Name and mailing address of the ISA/<br>Japanese Patent Office | Authorized officer |
|---|---|
| Facsimile No. | Telephone No. |

Form PCT/ISA/210 (second sheet) (July 2009)

| | INTERNATIONAL SEARCH REPORT | International application No. |
|---|---|---|
| | | PCT/JP2011/055272 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2009/154219 A1  (Sumitomo Chemical Co., Ltd.),<br>23 December 2009 (23.12.2009),<br>entire text<br>(Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05105704 A